Europäisches Patentamt

European Patent Office

Office européen des brevets

(19)

(11) **EP 0 896 278 A1**

(12) **EUROPEAN PATENT APPLICATION**

(43) Date of publication:
10.02.1999 Bulletin 1999/06

(51) Int. Cl.⁶: **G06F 12/08**

(21) Application number: 98114575.8

(22) Date of filing: 03.08.1998

(84) Designated Contracting States:
AT BE CH CY DE DK ES FI FR GB GR IE IT LI LU
MC NL PT SE
Designated Extension States:
AL LT LV MK RO SI

(30) Priority: 06.08.1997 JP 211653/97

(71) Applicant: NEC CORPORATION
Tokyo (JP)

(72) Inventor: Aoki, Junichi
Minato-ku, Tokyo (JP)

(74) Representative:
Glawe, Delfs, Moll & Partner
Patentanwälte
Postfach 26 01 62
80058 München (DE)

(54) **Semiconductor apparatus having internal cache memory**

(57)    A semiconductor apparatus having an internal instruction cache memory (4A) and an internal data cache memory (4B), which is characterized by invalidating means (106) for invalidating a cache line of the instruction cache memory and a cache line of the data cache memory simultaneously, the former cache line and the latter cache line having a common address.

According to the present invention, in case that the number of lines of the instruction cache memory is the same as the number of lines of the data cache memory, the time period necessary for invalidating all the cache lines can be halved.

F I G . 1

EP 0 896 278 A1

## Description

### Background of the Invention

Field of the Invention:

The present invention relates to a semiconductor apparatus having an internal cache memory and in particular, to a semiconductor apparatus having an internal instruction cache memory and an internal data cache memory.

Description of the Related Art:

In a semiconductor apparatus having an internal instruction cache memory and an internal data cache memory, just after the semiconductor apparatus has been turned on or reset, data stored in the cache memory becomes indefinite or invalid. Thus, all cache lines must be invalidated. In order to invalidate a cache line, zeros are set to VALID bits of a relevant tag memory. This process (invalidating process) is normally performed by software. One cache line of the instruction cache memory or the data cache memory is invalidated by one instruction at a time. Thus, when the number of cache lines increases, the number of times of the execution of the invalidating process increases. Consequently, it takes a long time to invalidate all the cache lines.

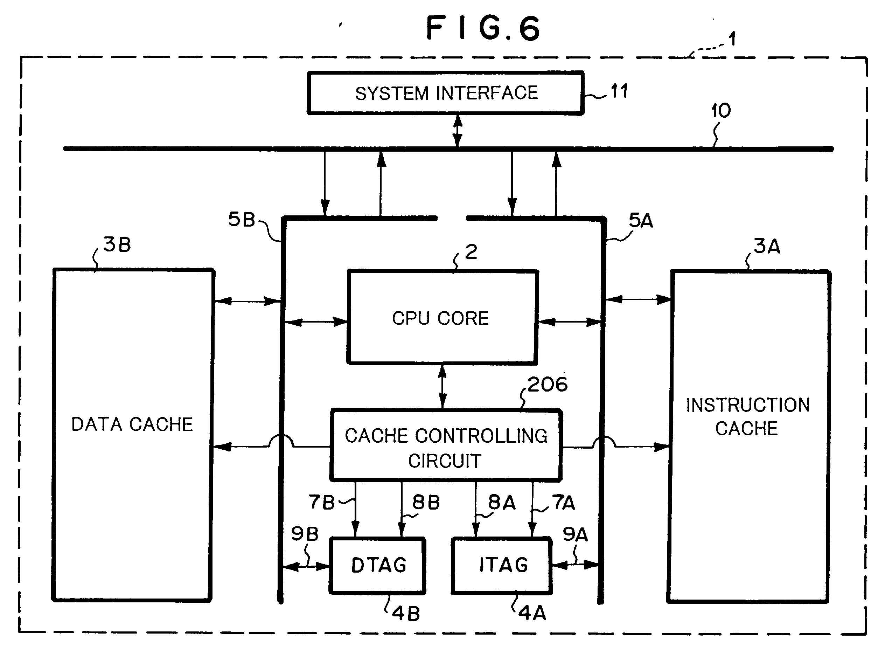

Fig. 6 is a block diagram showing an example of the structure of a conventional microprocessor having internal cache memories. Referring to Fig. 6, microprocessor 1 comprises CPU core 2, instruction cache memory 3A, data cache memory 3B, instruction tag memory 42A, data tag memory 42B, cache controlling circuit 206, and a system interface circuit 11. When a cache line is invalidated, CPU core 2 executes a tag write instruction and determines a cache address. Cache controlling circuit 206 generates both tag data to be written to a tag memory and a tag write enable signal corresponding to the result of the tag write instruction received from CPU core 2 and writes zero to VALID bit of a tag memory corresponding to the determined cache address. To invalidate all the cache lines, the tag write instruction must be executed as many times as the number of cache lines.

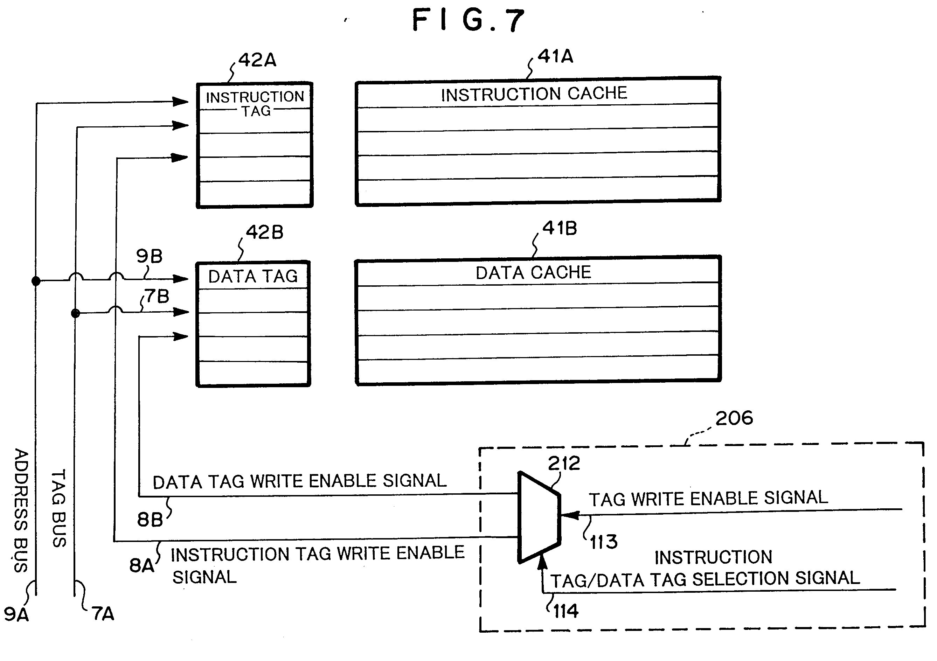

Fig. 7 is a schematic diagram showing the structure of a conventional cache memory. When the tag write instruction is executed, cache controlling circuit 206 generates tag write enable signal 113 and instruction tag/data tag selection signal 114. Instruction tag/data tag selection signal 114 is used to determine whether tag writing is enabled for instruction tag memory 42A or it is enabled for data tag memory 42B. For example, when an instruction tag memory is invalidated, instruction tag/data tag selection signal 114 causes tag write enable signal 113 to be transmitted to instruction tag write enable signal 8A. Thus, zero is written to VALID bit of the instruction tag line designated by the address received through address bus 9A. The invalidating process is repeatedly executed as many times as the number of cache lines. When the data tag memory is invalidated, tag write enable signal 113 is transmitted to data tag write enable signal 8B. Thereafter, the invalidating process is executed for the data tag memory similarly to the instruction tag memory.

In the above-explained invalidating process, tag data is forcedly written to a particular tag line by a software instruction. By writing zeros to VALID bits of tag data, all the cache lines are invalidated. Thus, the invalidating process must be sequentially executed as many times as the number of cache lines. In addition, the instruction cache lines and the data cache lines must be separately invalidated.

Generally, the invalidating process for all the cache lines is executed only after the semiconductor apparatus has been turned on or reset. Thus, the invalidating process is not often executed in a system using the semiconductor apparatus. Therefore, long-running execution of the invalidating process does not cause a serious problem. However, when the semiconductor apparatus is tested by an LSI tester using test patterns, since the independency of individual test patterns must be maintained, the invalidating process must be executed at the beginning of each of all the test patterns. Thus, the number of times of the execution of the invalidating process for all the cache lines increase in proportion to the number of test patterns. Hence, the test period becomes long, which becomes a major factor that lowers the productivity of the semiconductor apparatus. On the other hand, since the capacity of the internal cache memory in a semiconductor apparatus tends to increase, the period necessary for executing the invalidating process for all cache lines increases. Thus, the test period of semiconductor apparatus tends to become longer.

### Summary of the Invention

An object of the present invention is to provide a semiconductor apparatus having a cache memory which enables effective or short-time invalidation process for all of the cache memory.

According to the present invention, there is provided a semiconductor apparatus having an internal instruction cache memory and an internal data cache memory, which comprises invalidating means for invalidating a cache line of the instruction cache memory and a cache line of the data cache memory simultaneously, the former cache line and the latter cache line having a common address.

According to the present invention, in case that the number of lines of the instruction cache memory is the same as the number of lines of the data cache memory, the time period necessary for invalidating all the cache lines can be halved.

These and other objects, features and advantages of the present invention will become more apparent in light of the following detailed description of the preferred mode embodiment thereof, as illustrated in the accompanying drawings.

Brief Description of Drawings

Fig. 1 is a block diagram showing the structure of a cache block of a semiconductor apparatus having an internal cache memory according to a first embodiment of the present invention;
Fig. 2 is a schematic diagram showing a write enable signal selecting circuit 112 shown in Fig. 1;
Fig. 3 is a timing chart showing the operation of the write enable signal selecting circuit 112 shown in Fig. 2;
Fig. 4 is a block diagram showing the structure of a cache block of a semiconductor apparatus having an internal cache memory according to a second embodiment of the present invention;
Fig. 5 is a timing chart showing the operation of the cache block shown in Fig. 4;
Fig. 6 is a block diagram showing the structure of a conventional microprocessor having an internal cache memory; and
Fig. 7 is a block diagram showing the structure of a conventional cache memory shown in Fig. 6.

Description of Preferred Embodiments

Next, with reference to the accompanying drawings, a first embodiment of the present invention will be explained.

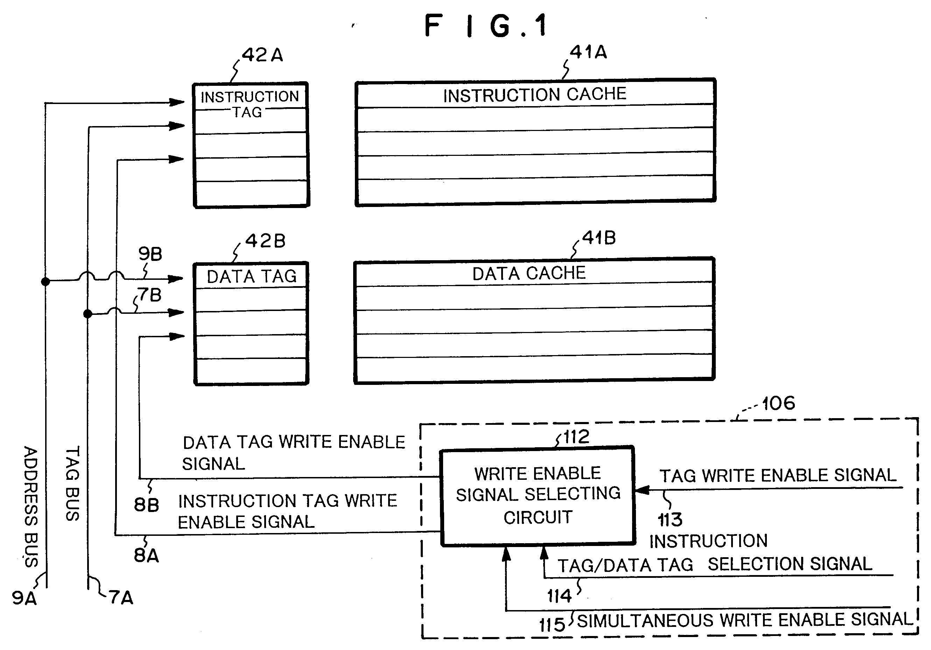

Fig. 1 is a block diagram showing the structure of a cache block of a semiconductor apparatus having an internal cache memory according to the first embodiment of the present invention. In the first embodiment, tag data is simultaneously written to an instruction tag and a data tag by software. When a CPU core executes a tag write instruction, cache controlling circuit 106 generates tag write enable signal 113, instruction tag/data tag selection signal 114, and simultaneous write enable signal 115. Cache controlling circuit 106 has write enable signal selecting circuit 112. When the logic level of the simultaneous write enable signal 115 is set to one and thereby the simultaneous write enable state takes place, write enable signal selecting circuit 112 selects both of instruction tag write enable signal 8A and data tag write enable signal 8B and transmits tag write signal 113 to both of instruction tag write enable signal 8A and data tag write enable signal 8B. A common cache address is sent to instruction tag 42A and data tag 42B through address buses 9A and 9B, respectively. In addition, common tag data is sent to instruction tag 42A and data tag 42B through tag buses 7A and 7B, respectively, The tag data has VALID bit. When a cache line is invalidated, data having VALID = 0 is sent to instruction tag 42A and data tag 42B. When instruction tag write enable signal 8A and the data tag write enable signal 8B are applied to instruction tag 42A and data tag 42B, respectively, tag data are simultaneously written to instruction tag 42A and data tab 42B.

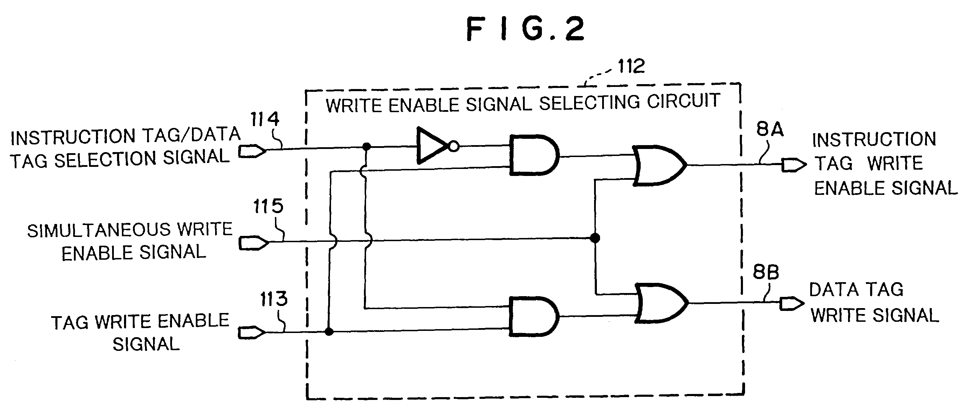

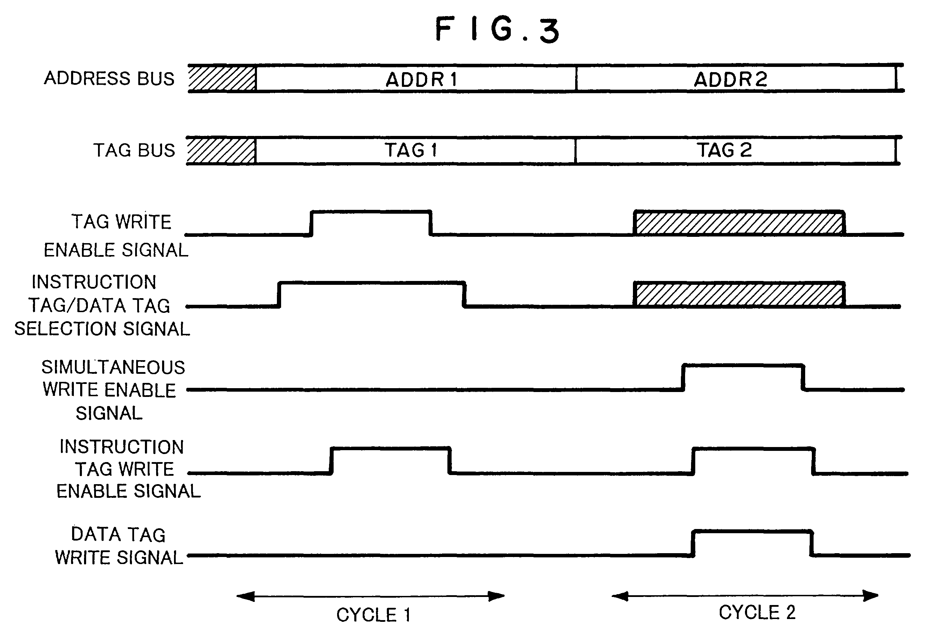

Fig. 2 is a schematic diagram showing write enable signal selecting circuit 112 according to the first embodiment of the present invention. Fig. 3 is a timing chart showing the operation of write enable signal selecting circuit 112. Next, with reference to Fig. 3, the operation of write enable signal selecting circuit 112 will be explained.

In Fig. 3, cycle 1 represents that only an instruction tag is invalidated similarly to the related art reference. Thus, in cycle 1, the logic level of simultaneous write enable signal 115 (INVEN) is zero. ADDR1 is sent to address bus 9A. TAG1 is sent to the tag bus 7A. VALID bit of TAG1 is zero. Since the logic level of instruction tag/data tag selection signal 114 has been set to one tag write enable signal 113 (TAGWEN) is transmitted to instruction tag write enable signal 8A. Thus, tag write enable signal is set to one, tag data including VALID which is set to zero is written to tag memory line designated by ADDR1. Thus, a cache line corresponding to the tag memory line is invalidated. On the other hand, since the logic level of data tag write enable signal 8B (DTAGWEN) remains zero VALID bit of a data tag line designated by ADDR1 is not changed.

In cycle 2, simultaneous write enable signal 114 is set to one. Thus, the simultaneous writing to instruction tag 42A and data tag 42B is enabled. When the logic level of simultaneous write enable signal 115 is set to one, regardless of the logic levels of tag write enable signal 113 and instruction tag/data tag selection signal 114 (ITAGSEL), the logic levels of instruction tag write enable signal 8A and data tag write enable signal 8B are forcedly set to one. Thus, tag data TAG2 having VALID bit which is set to zero is simultaneously written to common tag memory lines of the instruction tag and the data tag designated by ADDR2. Consequently, a single execution of the tag write instruction makes the instruction cache line and the data cache lines designated by common cache address ADDR2 simultaneously invalidated. The instruction cache write instruction and the data cache write instruction are separately executed in the conventional semiconductor apparatus. Therefore, supposing the number of instruction cache lines is equal to the number of data cache lines in a semiconductor apparatus, the number of times of the execution of the tag write instruction necessary for invalidating all the cache lines can be halved by this embodiment. Thus, the time period necessary for the invalidating all the cache lines can be halved by this embodiment.

Next, with reference to the accompanying drawings, a second embodiment of the present invention will be explained.

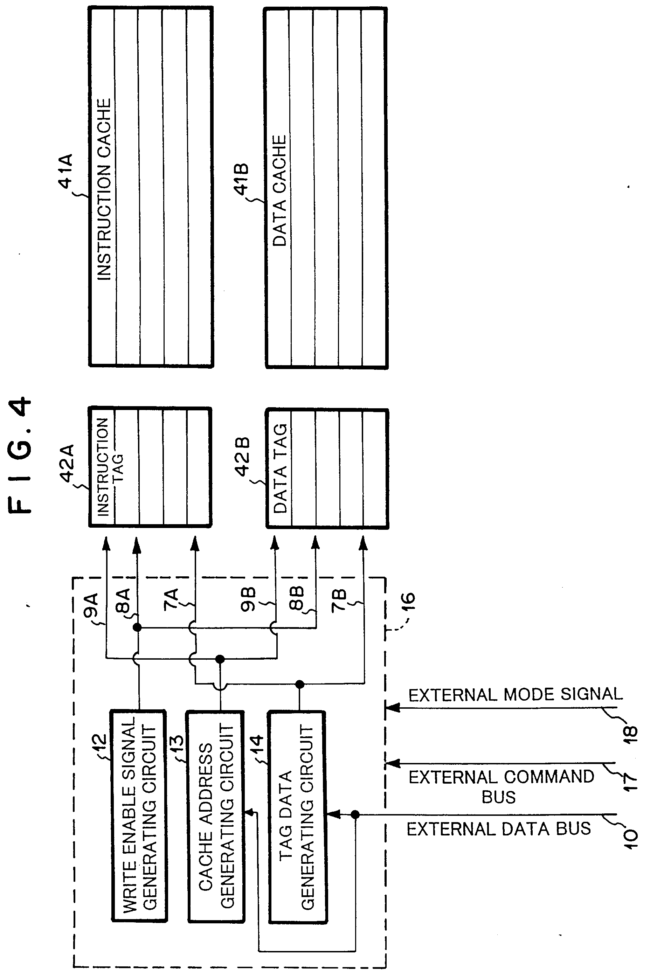

Fig. 4 is a block diagram showing the structure of a cache block of a semiconductor apparatus having an internal cache memory according to the second embodiment of the present invention. In the first embodiment, the simultaneous writing operation for an instruction tag and a data tag is executed by software. However, according to the second embodiment, zero is written to VALID bit of a tag line from the external through external pins in test mode in which cache memories can be accessed from the external.

The semiconductor apparatus having internal cache memory according to the second embodiment comprises test mode circuit 16. Test mode circuit 16 enables data to be read/written from/to the external to/from the cache memories. Test mode circuit 16 comprises the terminal connected to external data bus 10, the terminal connected to external command bus 17, terminal connected to external mode signal 18, write enable signal generating circuit 12, cache address generating circuit 13, and tag data generating circuit 14. External data bus 10 is used for inputting a cache address and tag data from external. Command bus 17 is used for selecting a cache block to which data is written. Signals that are sent from the external to test mode circuit 16 through command bus 17 include a combination of signals representing the command that causes tag data to be simultaneous written to the instruction tag and the data tag. External mode signal 18 allows data supplied from the external to be directly written the cache memories . Write enable signal generating circuit 12 generates instruction tag write enable signal 8A and data tag write enable signal 8B separately or simultaneously corresponding to the command received from external command bus 17. Address generating circuit 13 transmits the cache address received from external data bus 10 to internal address buses 9A and 9B. Tag data generating circuit 14 transmits tag write data received from external data bus 10 to internal tag buses 7A and 7B.

When external mode signal 18 is activated, the semiconductor apparatus gets into the test mode in which the cache memories can be accessed from the external. When a cache address is supplied from external data bus 10 to test mode circuit 16, the cache address is transmitted to instruction tag 42A and data tag 42B as a common cached address through address buses 9A and 9B, respectively. Thereafter, when tag data is supplied from external data bus 10 to test mode circuit 16, the tag data is transmitted to instruction tag 42A and data tag 42B as a common tag data through tag buses 7A and 7B. When a command for simultaneous writing to instruction tag 42A and data tag 42B is supplied to test mode circuit 16 through command bus 17, write enable signal generating circuit 12 simultaneously activates instruction tag write enable signal 8A and data tag write enable signal 8B. In the above-explained process, tag data is simultaneously written to instruction tag line in instruction tag 42A and a data tag line in data tag 42B which have the common cache address. If zero is written to VALID bit of the tag data in the above-explained process, the relevant cache line is invalidated. After the above-explained process has been performed for all the cache lines, they become invalidated.

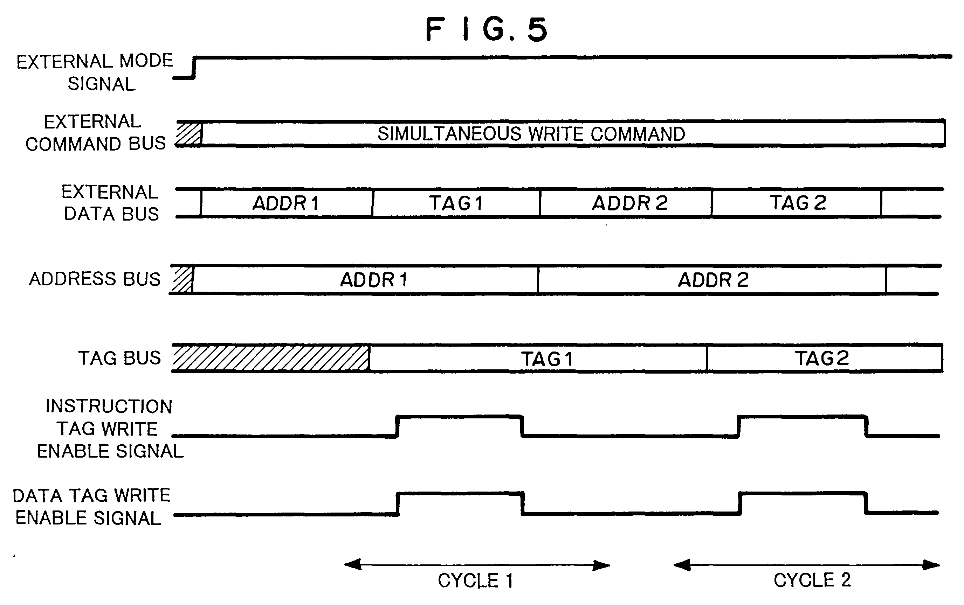

Fig. 5 is a timing chart showing the operation of test mode circuit 16 shown in Fig. 4. When the logic level of external mode signal 18 is set to one, the semiconductor apparatus gets into the test mode. At the same time, the command for simultaneous writing to instruction tag 42A and data tag 42B is set on external command bus 17. After cache address ADDR1 has been set to external data bus 10 and until another cache address ADDR2 is set thereto, the cache address ADDR1 appears on address buses 9A and 9B. Similarly, after tag data TAG1 has been set to external data bus 10 and until another tag data TAG2 is set thereto, the tag data TAG1 appears on tag buses 7A and 7B. When cache address ADDR1 and tag data TAG1 become stable, the logic levels of instruction tag write enable signal 8A and the data tag write enable signal 8B are simultaneously set to one. Thus, tag data is simultaneously written to an instruction tag line in instruction tag 42A and a data tag line in data tag 42B that have the same cache address. Since VALID bit of the tag data has been set to zero, the instruction cache line and the data cache line are simultaneously invalidated. The instruction cache write instruction and the data cache write instruction are separately executed in the conventional semiconductor apparatus. Therefore, supposing the number of instruction cache lines is equal to the number of data cache lines in a semiconductor apparatus, the number of times of the execution of the tag write instruction necessary for invalidating all the cache lines can be halved by this embodiment. Thus, the time period necessary for the invalidating all the cache lines can be halved by this embodiment.

As explained above, as an effect of the present invention, since tag data is simultaneously written to an instruction tag line and a data tag line having the same cache address, the time period necessary for invalidating all cache lines can be decreased. According to the present invention, the decreased time period for invalidating all cache lines is given by the following equation:

$$\Delta T = \{Lc/(Li + Ld)\} \times T$$

wherein Lc stands for the number of pairs of instruction cache line and data cache line that have common address, Li stands for the number of all instruction cache lines, Ld stands for the number of all data cache lines, and T stands for the conventional time period necessary for invalidating all cache lines.

Thus, when the number of instruction cache lines is equal to the number of data cache lines and instruction cache lines and data tag lines have common cache addresses, since the conditions of Li = Ld and Lc = Li are satisfied, the decreased time period for invalidating all cache lines is given by $\Delta T = 0.5\ T$, that is to say, all cache lines can be invalidated in the half time as compared to the conventional semiconductor apparatus.

Although the present invention has been shown and explained with respect to the preferred mode embodiments thereof, it should be understood by those skilled in the art that the foregoing and various other changes, omissions, and additions in the form and detail thereof may be made therein without departing from the spirit and scope of the present invention.

## Claims

1. A semiconductor apparatus having an internal instruction cache memory (4A) and an internal data cache memory (4B), which is characterized by:

   invalidating means (106) for invalidating a cache line of said instruction cache memory and a cache line of said data cache memory simultaneously, the former cache line and the latter cache line having a common address.

2. The semiconductor apparatus as set forth in claim 1,
   wherein said invalidating means (106) sets prescribed data to a first tag line corresponding to said cache line of said instruction cache memory (4A) and a second tag line corresponding to said cache line of said data cache memory (4B).

3. The semiconductor apparatus as set forth in claim 2,
   wherein said invalidating means (106) comprises a selecting circuit (112) which transmits a tag write enable signal (113) to a instruction tag write enable signal (8A) which is supplied to a instruction tag (4A) consisting of said first tag lines or to a data tag write enable signal (8B) which is supplied to data tag (4B) consisting of said second tag lines corresponding to a instruction tag/data tag selecting signal (114) in case that a simultaneous write enable signal (115) is not active and transmits said simultaneous write enable signal (115) to said instruction tag write enable signal (8A) and to said data tag write enable signal (8B) simultaneously in case that said simultaneous write enable signal (115) is active.

4. The semiconductor apparatus as set forth in claim 2,
   wherein said common address and said prescribed data is generated inside the apparatus.

5. The semiconductor apparatus as set forth in claim 2,
   wherein said common address and said prescribed data is supplied from external.

6. A semiconductor apparatus comprising an internal instruction cache memory (4A) and an internal data cache memory (4B), which is characterized by:

   means (13) for transmitting line address supplied from external (10) to an instruction tag (4A) which corresponds to said internal instruction cache memory (4A) and a data tag (4B) which corresponds to said internal data cache memory (4B);
   means (14) for transmitting tag data supplied from external (10) to said instruction tag (4B) and said data tag (4B); and
   means (12) for writing said tag data to a tag line in said instruction tag designated by said line address and a tag line in said data tag designated by said line address.

# F I G . 1

```
                    42A                        41A
              ┌──────────┐      ┌──────────────────────────┐
              │INSTRUCTION│     │   INSTRUCTION CACHE      │
      ───────▶│   TAG     │     │                          │
              ├──────────┤      ├──────────────────────────┤
      ───────▶│          │      │                          │
              ├──────────┤      ├──────────────────────────┤
      ───────▶│          │      │                          │
              ├──────────┤      ├──────────────────────────┤
              │          │      │                          │
              └──────────┘      └──────────────────────────┘

   9B               42B                        41B
              ┌──────────┐      ┌──────────────────────────┐
   7B         │ DATA TAG │      │     DATA CACHE           │
      ───────▶│          │      │                          │
              ├──────────┤      ├──────────────────────────┤
      ───────▶│          │      │                          │
              ├──────────┤      ├──────────────────────────┤
      ───────▶│          │      │                          │
              ├──────────┤      ├──────────────────────────┤
              │          │      │                          │
              └──────────┘      └──────────────────────────┘
```

106

DATA TAG WRITE ENABLE SIGNAL

112

WRITE ENABLE SIGNAL SELECTING CIRCUIT

TAG WRITE ENABLE SIGNAL

8B    INSTRUCTION TAG WRITE ENABLE SIGNAL

113

INSTRUCTION

8A

TAG/DATA TAG   SELECTION SIGNAL

114

ADDRESS BUS

TAG BUS

9A        7A

115 SIMULTANEOUS WRITE ENABLE SIGNAL

EP 0 896 278 A1

# F I G. 2

112

WRITE ENABLE SIGNAL SELECTING CIRCUIT

INSTRUCTION TAG/DATA TAG SELECTION SIGNAL    114

SIMULTANEOUS WRITE ENABLE SIGNAL    115

TAG WRITE ENABLE SIGNAL    113

8A    INSTRUCTION TAG WRITE ENABLE SIGNAL

8B    DATA TAG WRITE SIGNAL

EP 0 896 278 A1

# FIG.3

ADDRESS BUS | ADDR 1 | ADDR 2

TAG BUS | TAG 1 | TAG 2

TAG WRITE ENABLE SIGNAL

INSTRUCTION TAG/DATA TAG SELECTION SIGNAL

SIMULTANEOUS WRITE ENABLE SIGNAL

INSTRUCTION TAG WRITE ENABLE SIGNAL

DATA TAG WRITE SIGNAL

CYCLE 1

CYCLE 2

EP 0 896 278 A1

# F I G. 4

EP 0 896 278 A1

# F I G. 5

EXTERNAL MODE SIGNAL

EXTERNAL COMMAND BUS — SIMULTANEOUS WRITE COMMAND

EXTERNAL DATA BUS — ADDR 1 | TAG 1 | ADDR 2 | TAG 2

ADDRESS BUS — ADDR 1 | ADDR 2

TAG BUS — TAG 1 | TAG 2

INSTRUCTION TAG WRITE ENABLE SIGNAL

DATA TAG WRITE ENABLE SIGNAL

CYCLE 1

CYCLE 2

EP 0 896 278 A1

# F I G. 6

SYSTEM INTERFACE ~11

10

5B                    5A

3B                                    3A

2

CPU CORE

206

DATA CACHE        CACHE CONTROLLING
                        CIRCUIT            INSTRUCTION
                                            CACHE

7B    8B    8A    7A

9B                            9A

DTAG        ITAG

4B            4A

EP 0 896 278 A1

# F I G. 7

42A INSTRUCTION TAG

41A INSTRUCTION CACHE

42B DATA TAG

41B DATA CACHE

9B

7B

206

212

113 TAG WRITE ENABLE SIGNAL

DATA TAG WRITE ENABLE SIGNAL

8B

8A INSTRUCTION TAG WRITE ENABLE SIGNAL

INSTRUCTION TAG/DATA TAG SELECTION SIGNAL

114

ADDRESS BUS

TAG BUS

9A

7A

EP 0 896 278 A1

**European Patent Office**

## EUROPEAN SEARCH REPORT

Application Number

EP 98 11 4575

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 325 422 A (ADVANCED MICRO DEVICES INC) 26 July 1989 <br> * column 24, line 14 - line 60 * <br> --- | 1-6 | G06F12/08 |
| X | GB 2 200 483 A (NAT SEMICONDUCTOR CORP) 3 August 1988 <br> * page 48, line 32 - page 50, line 14 * <br> --- | 1-6 | |
| A | EP 0 438 808 A (TOKYO SHIBAURA ELECTRIC CO) 31 July 1991 <br> * abstract * <br> * column 3, line 49 - column 4, line 26; figures 1,3,5 * <br> ----- | 1-6 | |
| | | | TECHNICAL FIELDS SEARCHED (Int.Cl.6) <br><br> G06F |

The present search report has been drawn up for all claims

| Place of search | Date of completion of the search | Examiner |
|---|---|---|
| THE HAGUE | 3 November 1998 | Nielsen, O |

EPO FORM 1503 03.82 (P04C01)